# EUROPEAN PATENT APPLICATION

(11) **EP 3 628 900 A1**
(43) Date of publication of application: **01.04.2020**
(21) Application number: 19199872.3
(22) Date of filing: 26.09.2019
(51) Int. Cl.: F16K 5/06

(54) **SEALING SYSTEM FOR A VALVE**

(30) Priority: 26.09.2018 DE 102018123724
(71) Applicant: Johnson Electric International AG, 3280 Murten (CH)
(72) Inventor: Urban, Christian, Hong Kong (HK); Endt, Joerg, Hong Kong (HK); Ettrich, Torsten, Shatin, N.T. (HK)
(74) Representative: Hocking, Adrian Niall

(57) **Abstract**

The invention relates to a sealing system (1) for a valve for interruption of a fluid flow along a fluid flow path passing through the valve, the sealing system includes an inlet adapter (10), a valve body (7) connected to the inlet adapter (10), a seal (5) arranged between the inlet adapter (10) and the valve body (7) with a seal opening (6) through the seal for the fluid flowing when the valve is open, and a sealing body (2) with a ball segment-shaped sealing surface element (3) and bearing element (4) arranged on the side of the sealing surface element (3). The sealing body (2) is mounted within the valve body (7) so as to be rotatable around an axis running substantially perpendicular to the fluid flow path and through the bearing element (4).

## Description

### FIELD OF THE INVENTION

The invention relates to a sealing system for a valve for the interruption of a fluid flow along a fluid flow path passing through the valve.

### BACKGROUND OF THE INVENTION

Valves are components which are used for shutting off or controlling the flow of liquids or gases, in the process of which a sealing body is moved within the valve. The flow is reduced or interrupted by the entire sealing body being pressed onto a suitably shaped opening.

In particular, valves are also used in gas meters to interrupt the gas flow. To achieve complete interruption, suitable sealing systems with sealing bodies are used. In order to regulate or interrupt the gas flow in gas meters, rotary valves in particular are suitable. Here a sealing body is arrested in a closed and an open valve position, so that the gas flow is interrupted or allowed through.

In the prior art, sealing bodies with a spherical or cone-shaped form, made from metal or plastic with a passage for a specified volume flow, are already known. In addition, sealing bodies with a spherical form exist which consist of a metal core with a plastic over-mould. The functional principle with this type of valve is a rotary movement of the sealing body by 90°, so that the volume flow is either stopped or allowed through.

Owing to the large number of individual components, the assembly of a sealing system from the prior art is, furthermore, complex and/or costly and the risk of leakage is increased.

### SUMMARY OF THE INVENTION

Accordingly, there is a desire for sealing system for a valve which enables the reliable blocking of a fluid flow and avoids uneven stresses - both for the open and the closed valve position - for the seal owing to the pressure of the sealing body; here particular importance is also attached to cost-effective production.

The sealing system for a valve for the interruption of a fluid flow along a fluid flow path passing through the valve, the sealing system includes an inlet adapter, a valve body connected to the inlet adapter, a seal arranged between the inlet adapter and the valve body with a seal opening through the seal for the fluid flowing when the valve is open, and a sealing body mounted within the valve body to be rotatable around an axis running substantially perpendicular to the fluid flow path. The sealing body includes a ball segment-shaped sealing surface element and bearing elements arranged at the side(s) of the sealing surface element. The sealing body is positionable by a rotary movement in an open and a closed valve position. The sealing surface element is designed that the sealing surface element completely closes the seal opening in the closed valve position and after rotation of the sealing body into the open valve position where there is no point of contact with the seal.

Preferably, the seal opening is designed circular or oval.

Preferably, the sealing body is mounted to be rotatable around an axis leading through the laterally arranged bearing elements within the valve body.

Preferably, the sealing system includes a spring element, the spring element is arranged with limited movement within the sealing system and the seal and the sealing surface element of the sealing body are pressed onto each other by the spring element.

Preferably, the sealing system includes a spring element, the spring element is arranged on the seal and the movement of the spring element is limited by a spring-guiding element within the inlet adapter, wherein a pressure is exerted by the spring element on the seal that the seal is pressed against the sealing surface element with a positioning of the sealing body in a closed valve position.

Preferably, the spring element is integrated in the seal.

Preferably, the shape of the seal and the arrangement of the seal within the sealing system produces a spring effect.

Preferably, the spring element is arranged within a bearing adapter mounted so as to be rotatable within a valve body, the sealing body is flexibly connected to the bearing adapter.

Preferably, the seal is designed as a sealing lip.

Preferably, the sealing body encloses an angle which is larger than 90° between the open and closed valve position.

Below, embodiments of the present disclosure will be described in detail with reference to the accompanying drawings.

### BRIEF DESCRIPTION OF THE DRAWINGS

Fig. 1 is an exploded perspective view of a sealing system according to one embodiment of the present invention;
Fig. 2A and 2B are sectional views of the sealing system of Fig. 1 in the off position;
Fig. 3A and 3B are sectional views of the sealing system of Fig. 1 in the open position;
Fig. 4A, 4B and 4C are perspective views of a sealing system with a bearing adapter;
Fig. 5A and 5B are perspective views of a sealing system with several spring elements;
Fig. 6A and 6B are perspective views of sealing systems without individual spring elements; and
Fig. 7 is a perspective view of a sealing system according to another embodiment of the present invention.

The following implementations are used for the description of the present disclosure in conjunction with above figures.

### DETAILED DESCRIPTION OF THE PREFERRED EMBODIMENTS

The technical solutions of the embodiments of the present invention will be clearly and completely described as follows with reference to the accompanying drawings. Apparently, the embodiments as described below are merely part of, rather than all, embodiments of the present invention. Based on the embodiments of the present invention, any other embodiment obtained by a person skilled in the art without paying any creative effort shall fall within the protection scope of the present invention.

It is noted that, when a component is described to be "fixed" to another component, it can be directly fixed to the another component or there may be an intermediate component. When a component is described to be "connected" to another component, it can be directly connected to the another component or there may be an intermediate component. When a component is described to be "disposed" on another component, it can be directly disposed on the another component or there may be an intermediate component.

Unless otherwise specified, all technical and scientific terms have the ordinary meaning as commonly understood by people skilled in the art. The terms used in this disclosure are illustrative rather than limiting. The term "and/or" used in this disclosure means that each and every combination of one or more associated items listed are included.

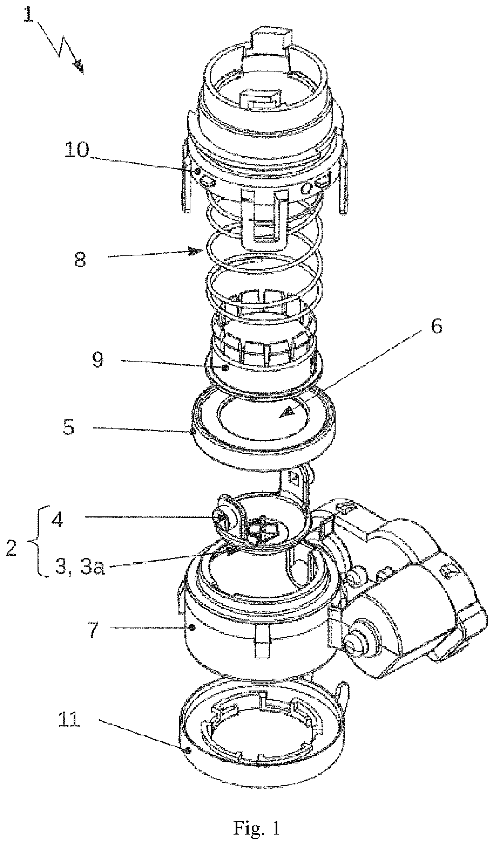

Fig. 1 shows one embodiment of a sealing system 1 for a valve. Through the sealing system 1 the valve is sealed off and, depending on the setting of the valve, a flow of a fluid, for example, gas or liquid or other fluid, through the valve is enabled or the flow of the fluid is prevented by a mechanical barrier, sealing body 2.

The sealing body 2 essentially includes a sealing surface element 3 with a sealing surface 3a and two bearing elements 4 arranged at the side(s). The sealing surface 3a of the sealing surface element 3 is designed in such a way that a circular seal opening 6 in a ring-shaped seal 5 can be sealed off through the placing of the sealing surface 3a of the sealing surface element 3 on the seal 5. Here the sealing surface 3a is the surface of the sealing surface element 3, which points in the direction of seal 5 in the case of a closed valve position and abuts the seal 5 and the seal opening 6. The seal opening 6 in the seal 5 is hence capable of being completely closed by the sealing surface element 3 of the sealing body 2, as a result of which the flow of a fluid through this seal opening 6 can be prevented. The flow path of the fluid runs axial to the seal 5 through the seal opening 6.

In at least one embodiments, the sealing body 2 is, by means of the bearing elements 4, mounted so as to be rotatable around an axis which runs through the bearing elements 4 arranged at the side(s). As a result, the sealing surface element 3 can be pivoted away from the seal opening 6. The sealing body 2 is arranged within a valve body 7 in which the sealing body 2 is fixed via the bearing elements 4.

In order to achieve a good seal between the seal 5 and the sealing body 2, a spring element 8 is arranged on the side of the seal 5 which faces away from the valve body 7, which is guided through a spring-guiding element 9 and is therefore held in position. The spring element 8 exerts a force on the seal 5 and thereby increases the pressure between the seal 5 and the sealing body 2. The counterpart, which makes it possible for the spring element 8 to exert a force on the seal 5, is in this case an inlet adapter 10, which is capable of being connected to the valve body 7 by means of fixing elements through a snap connection. Once assembled, the spring element 8 is limited spatially by the spring-guiding element 9. Thus an opposing force to the force is generated which acts through the spring element 8 on the spring-guiding element 9. Arranged on the side of the valve body 7 which faces away from the seal 5 is a second adapter element, the outlet adapter 11, which is likewise designed capable of being connected to the valve body 7.

The sealing system is designed in particular for simple and rapid assembly in an axial direction of the seal 5. The sealing body 2 engages via a snap connection with valve body 7. The sealing body 2 is designed symmetrical. Consequently, assembly in the correct position is not necessary. The sealing body 2 is designed in such a way that the bearings become deformed inwards during assembly. Thus sufficient undercut can be overcome in order to securely fix the sealing body 2 in the assembled state. Furthermore, the sealing body 2 in this embodiment has, in the interior of the ball segment-shaped sealing surface element 3, a cross or a cross-shaped raised section. This cross provides a simple gripper used for automated assembly with self-centring component pick-up and secure assembly.

For the assembly of seal 5, the seal 5 is placed on the valve body 7 and pre-centred on the basis of the stipulated geometry of the components. During the assembly of spring element 8, the spring element 8 is inserted into the inlet adapter 10 and the spring-guiding element 9 together with the spring element 8 is engaged with the inlet adapter 10 via a snap connection. Thereafter the individual inlet adapter 10 with the assembled spring system, which consists of spring element 8, spring-guiding element 9 and the inlet adapter 10, is engaged on valve body 7 via a snap connection. Here the fine centring of the seal 5 also takes place. The seal 5 is then fixed - providing a static back-to-back seal - between the valve body 7 and the inlet adapter 10.

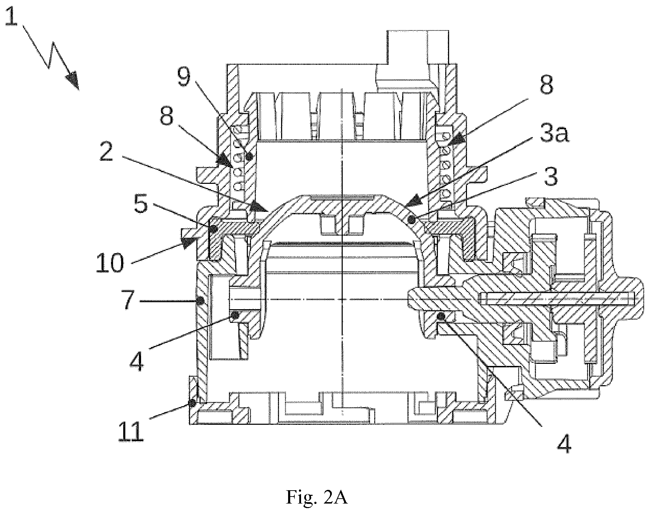

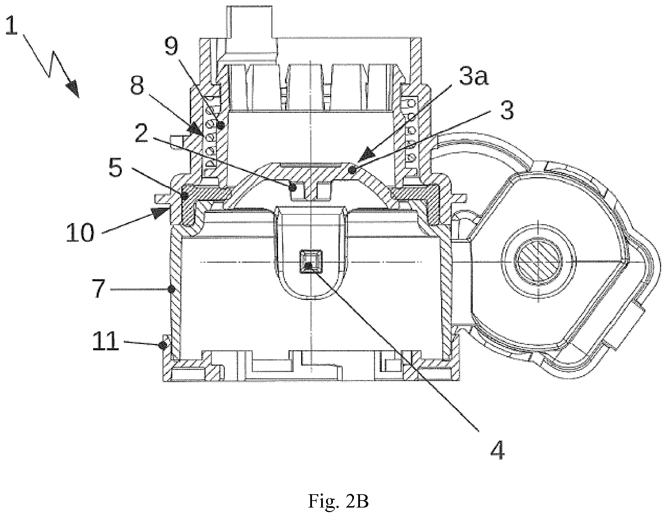

Fig. 2A and 2B show a sealing system 1 with a closed valve. Both illustrations show a cross section through the sealing system 1. Fig. 2B is shown rotated by 90° compared with Fig. 2A. Here the sealing body 2 prevents the flow of fluids through the valve, with the seal 5 providing a gas-tight seal between the inlet adapter 10 and the valve body 7. The sealing surface element 3 of the sealing body 2 abuts the seal 5 with the sealing surface 3a and completely blocks the flow path of the fluid.

The sealing body 2 has bearing elements 4 arranged at the side(s) by means of which the sealing body 2 is mounted so as to be rotatable within the valve body 7. The bearing elements 4 arranged at the side(s) have bearing pins on which the sealing body 2 is mounted in the valve body 7. In addition, the sealing body 2 has openings in the area of the laterally arranged bearing elements 4 through which a drive shaft can reach.

The inlet adapter 10 is connected to the valve body 7. A spring force from the spring element 8 acts on the seal 5, which results in a seal between the sealing surface element 3 and seal 5. The spring element 8 is arranged around the spring-guiding element 9. The force action of the spring element 8 on the seal 5 enhances the seal between the seal 5 and the sealing body 2. Through the limit stop on the inlet adapter 10, the spring effect on the seal 5 is limited in its movement.

The seal 5 is also shaped in such a way that, additionally, the housing components above and below the seal 5 are also sealed against each other and that also static, back-to-back sealing takes place between the inlet adapter 10 and the valve body 7. Here it is possible to have both an axial seal, as in this embodiment, or execution as a radial seal, or as a combination of a radial and axial seal. At the bottom end of the valve body 7 the outlet adapter 11 terminates the sealing system in a downward direction. The outlet adapter 11 can be connected to the valve body 7 in a customer-specific manner; here a mechanical and gas-tight connection for example by means of laser welding is suitable.

When the valve is closed the medium, i.e. the gas, flows from "above" through the customer-specific inlet adapter 10, then through the spring-guiding element 9 and is prevented from flowing further because of the seal 5 and the sealing body 2. The valve is closed.

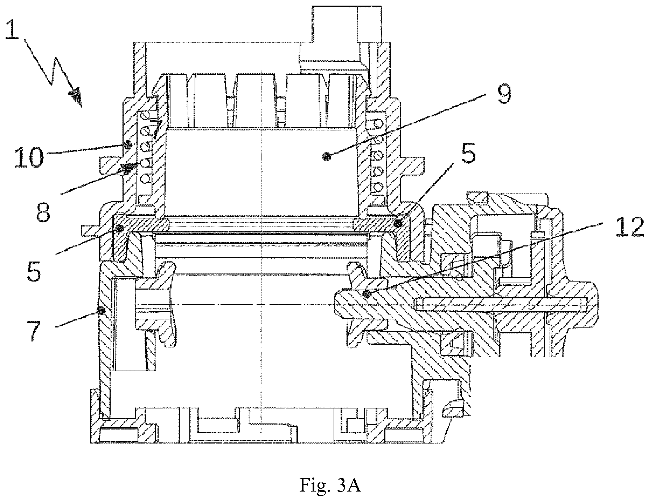

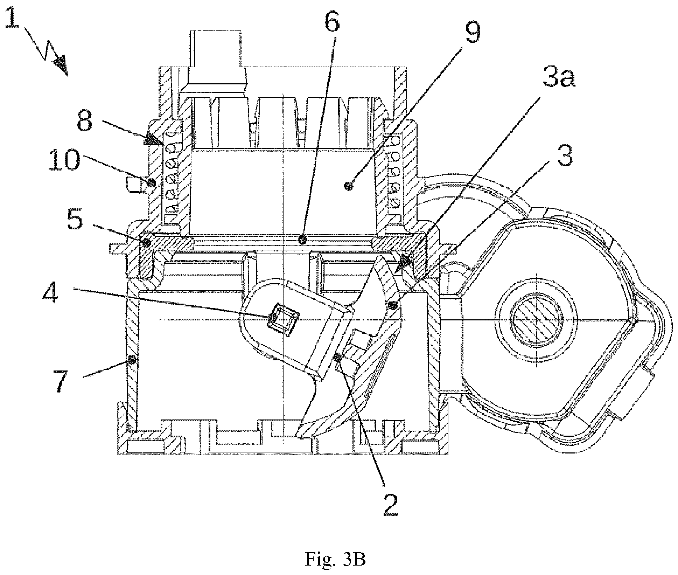

Fig. 3A and 3B show a sealing system 1 with an open valve. It is therefore possible for the medium to flow through and pass through the valve along the flow path. The illustration in Fig. 3B is arranged rotated by 90° in the open valve position relative to the illustration in Fig. 3A. The sealing body 2 is now arranged rotated by more than 90°compared with its position in Fig. 2A and 2B. The sealing body has been rotated or pivoted around an axis which runs through the bearing elements 4. The sealing surface element 3 with the sealing surface 3a of the sealing body 2 has, in this position, no contact with the seal 5 and the gas can flow through the seal opening 6 in the seal 5. The valve is completely open.

In at least one embodiment, a pivot angle of the sealing surface element 3 around an angle of more than 90° is needed with the design in this embodiment in order to ensure distance between the outer surface of the sealing surface element 3 and the seal 5. Particularly advantageous is a rotation by an angle of 115°, by means of which the sealing surface element 3 leaves the seal 5 securely. With an alternative embodiment with somewhat more installation space, this can also be guaranteed with an angle of just 90°. In addition, an angle of less than 115° between the positions of the sealing body 2 between the open and the closed valve position can be achieved by the seal opening 6 being reduced in size in relation to the size of the sealing body 2. This also enables an advantageous reduction in size of the sealing surface 3a and hence also of the sealing surface element 3.

The spring-guiding component 9 has been engaged with the customer-specific inlet adapter 10 by means of a snap connection. Through the spring-guiding element 9 the shapeability of the spring element 8 is fixed in such a way that the spring element 8 can only be moved along the axis of the spring element 8. As a result, the direction of the force which the spring element 8 exerts on the seal 5 is also restricted to the axial direction. The spring-guiding element 9 is axially deflected owing to the spring force of the spring element 8. The spring element 8 is axially deflected and acts uniformly on the seal 5. Consequently the seal 5 is stressed in an advantageous manner in terms of rotational symmetry. The seating for the seal 5 on the valve body 7 limits the deflection of the seal. As a result the insertion of the sealing body 2 into the seal 5 during the closing process is favoured. The seal 5 additionally provides a static, back-to-back seal between the inlet adapter 10 and the valve body 7. This may be in the form of an axial seal, as shown here, a radial seal or as a combined axial and radial seal.

The valve is opened and closed by means of a rotary movement of the sealing body 2. The sealing body 2 is pivoted by means of a drive wheel 12, which is connected to a motor control gear unit, from an open valve position in which the fluid can flow through the seal opening 6, into a closed valve position. In the closed valve position the sealing surface element 3 abuts the seal 5 with the sealing surface 3a and blocks the seal opening 6 as shown in Figures 2A and 2B.

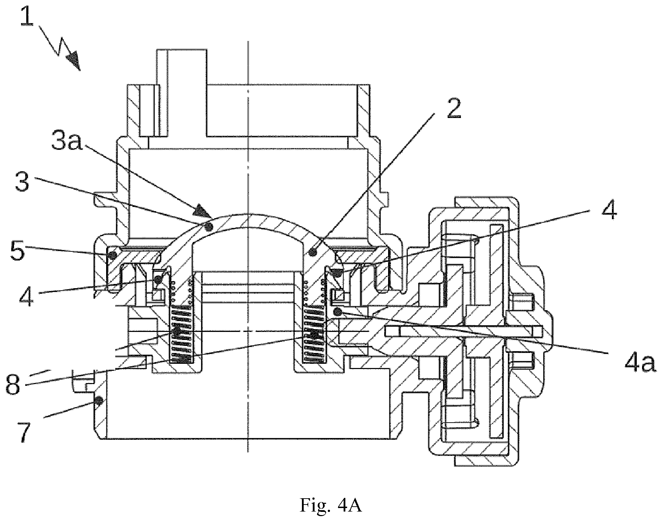

Fig. 4A shows a sealing system 1 in which the sealing body 2 is connected to a bearing adapter 4a by means of the bearing elements 4 arranged at the side(s). This bearing adapter 4a is mounted so as to be rotatable within the valve body 7. Within the bearing adapter 4a, spring elements 8 are arranged. These spring elements 8 are limited in their movement by the bearing adapter 4a and by the sealing body 2. By means of these spring elements 8 a force is exerted on the sealing body 2. With the valve closed, as shown here, as a result of this force effect from spring element 8 on the sealing surface element 3 of the sealing body 2, pressing with the sealing surface 3a against the seal 5 occurs, which improves the seal between seal 5 and sealing body 2.

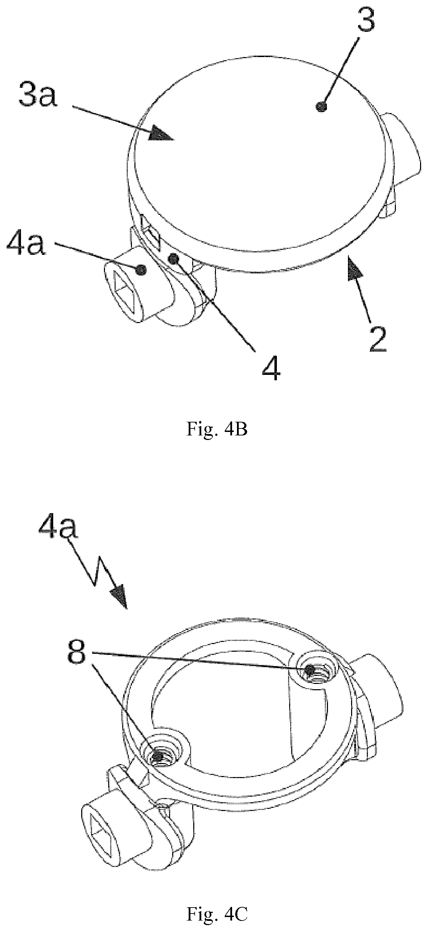

Fig. 4B shows the sealing body 2 with the sealing surface element 3 as well as its sealing surface 3a and the bearing adapter 4a. Here the bearing elements 4 arranged at the side(s) of the sealing body 2 are connected to the bearing adapter 4a. The bearing elements 4 are flexibly connected to the bearing adapter 4a in such a way that the bearing elements 4 are capable of being shifted by a certain distance in relation to the bearing adapter 4a. By this means, the spring force of the spring element 8 acts via the sealing body 2 on the seal 5. Fig. 4C shows a bearing adapter 4a. Spring elements 8 can be mounted in these. The bearing adapter 4a can be connected to a sealing body and can be mounted in a valve body.

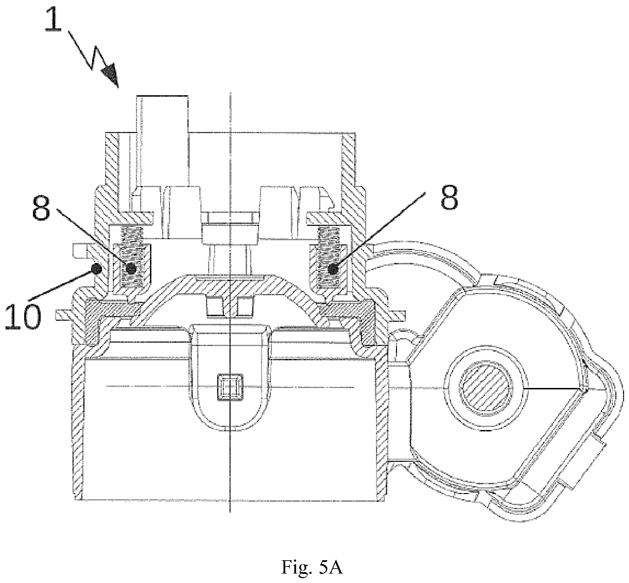

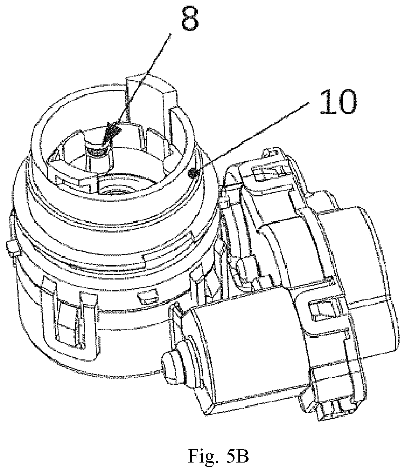

Fig. 5A and 5B show an embodiment of a sealing system 1 in which several spring elements 8 are arranged within the inlet adapter 10. Fig. 5A constitutes a cross-sectional view through the valve structure and Fig. 5B a perspective view from diagonally above.

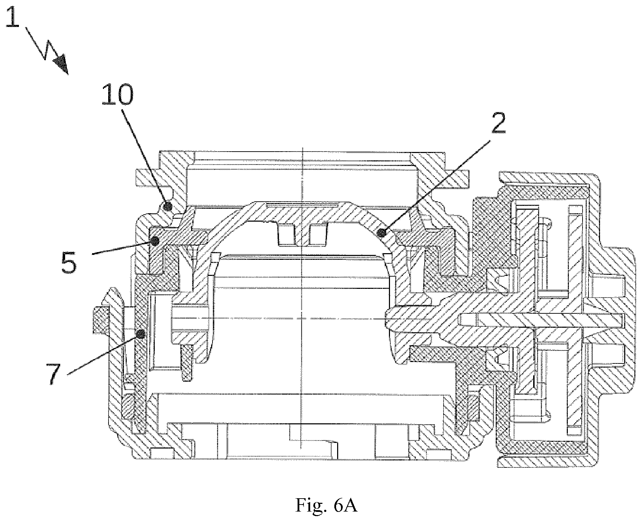

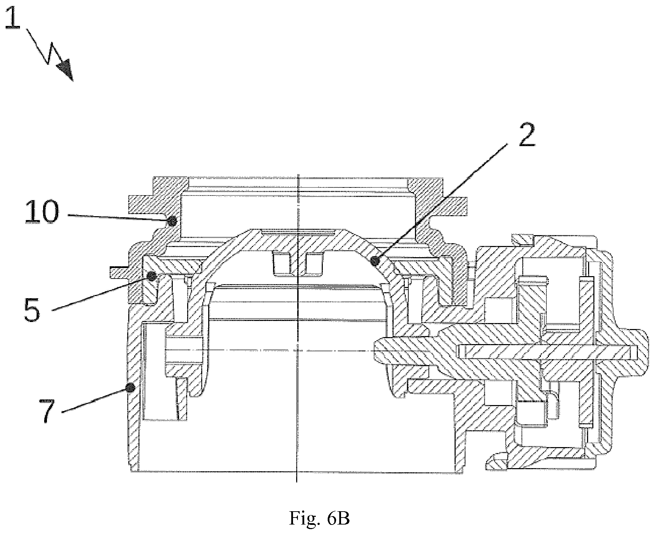

Fig. 6A and 6B show embodiments which do not have a separate spring element. The necessary spring force for supporting the sealing of the seal opening 6 and for the gas-tight sealing between the inlet adapter 10 and the valve body 7 is provided here by the seal 5 itself. Here the seal 5 can be designed in such a way that a spring element is integrated into the seal 5, or the seal 5 can be appropriately supported on the valve body 7 or on the inlet adapter 10 and the same sealing function can be achieved as with a separate spring element but with a reduced number of parts, i.e. without a separate spring element 8 and spring-guiding element 9. In Fig. 6A the seal is shaped in such a way that a spring element is integrated in the form of springy ribs or protuberances into the seal 5.

With the embodiment in Fig. 6B, the seal 5 can be supported on the inlet adapter 10 or on the valve body 7. Here the seal 5 designed as a sealing lip is prestressed owing to the installation space and the seal 5 is designed in such a way that secure insertion of the sealing body 2 into the seal 5 is also possible without a spring force limited in its movement.

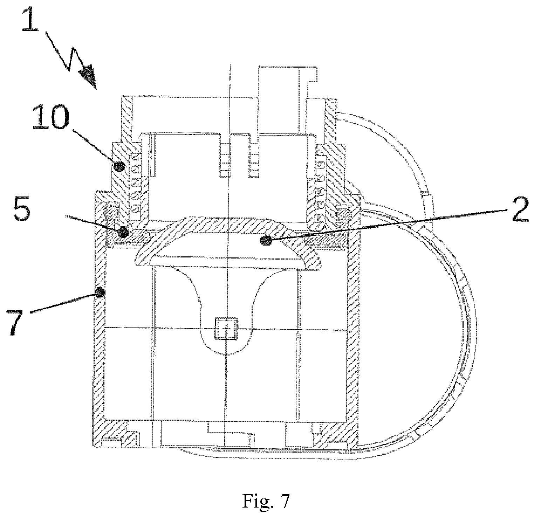

Fig. 7 shows a sealing system 1 in which the seal 5 is mounted on the side of the inlet adapter 10. The sealing body 2 arranged on the valve body 7 closes the opening and seals off the valve body 7 against the inlet adapter 10.

In at least one embodiment, the sealing system has an inlet adapter, a valve body attached to the inlet adapter, a seal arranged between the inlet adapter and the valve body with a seal opening through which the fluid flow flows when the valve is open, and a sealing body mounted so as to be rotatable within the valve body around an axis running within the valve body and perpendicular to the fluid flow path, with a ball segment-shaped sealing surface element and bearing elements arranged at the side(s). Here the sealing body is positionable by means of a rotary movement in an open and a closed valve position, with the sealing surface element being designed in such a way that the sealing surface element completely blocks the seal opening with its sealing surface in the closed valve position and after rotation of the sealing body into the open valve position no longer has any point of contact with the seal.

The inlet adapter and the valve body are sealed against each other in a gas-tight manner by means of the seal when the sealing body is arranged in the closed valve position. Here the sealing body advantageously seals off the seal in a gas-tight manner in the closed valve position.

In at least one embodiment, a ball segment-shaped sealing surface element 3, which is also termed a valve shutter, takes the shape of a section of a spherical surface; here it is not imperative that this is a perfect spherical surface. Areas, in particular in the center between the bearing elements arranged at the side(s), may be designed flattened or deformed in another manner. Rather, the important thing here is that it is only a section of a spherical surface and that it essentially follows the shape of a ball. The size of the one ball segment-shaped sealing surface element is preferably adapted to the size of the seal, with the surface area of the surface of the sealing surface element being larger than the surface of the seal opening and preferably smaller than twice the surface area of the seal opening.

An open valve position denotes, in terms of the invention, an arrangement of the individual components of a valve in which the gas flow can flow along a flow path through the valve. In contrast to this, the flow path of the gas through the valve is, in the closed valve position, blocked at one point. Here the components of the valve are therefore arranged in such a way that at least one of the components completely blocks the path of the gas through the valve. With this in mind, particularly the sealing body can be arranged in a closed valve position in which the sealing body blocks the flow-through of the gas through the valve. In addition, the sealing body is arranged in an open valve position if the gas can flow past the sealing body, in particular if the sealing body does not impede the flow of the gas, or only negligibly impedes it. The sealing body is, furthermore, arranged in a blocking position when the gas flow is prevented and a closed valve position exists. The sealing body is arranged in a 'pass-through' position if the gas can pass through the sealing body and the valve is open. Thus an open valve position exists.

The bearing elements arranged at the side(s) are arranged adjacent to the sealing surface element and can have different shapes. The bearing elements may for example have protuberances which reach into corresponding openings of the valve body. Alternatively the bearing elements themselves may have openings through which rods can be inserted.

An inlet adapter is, in terms of the invention, a component through which the gas flows before it reaches the valve body. In accordance with the invention the gas first flows through the inlet adapter, then the seal and subsequently the valve body.

With the invention it is possible to increase the robustness of the sealing system and both the number of parts and the costs of the parts can be reduced. In particular, the envisaged design is suitable for automation.

Owing to the miniaturised components, in particular the sealing body, which is therefore capable of being operated with a lower expenditure of energy, the invention permits reliable valve function with reduced energy input with regard to the drive unit.

The seal opening in the seal is preferably designed round or oval.

The sealing body has two bearing elements arranged at the side(s), which are preferably arranged on two opposite sides of the sealing surface element. Here the sealing body, in an advantageous design, is mounted so as to be rotatable around an axis leading through the laterally arranged bearing elements within the valve body. In an advantageous version, the sealing surface element is at a distance from the seal with a positioning of the sealing body in the open valve position.

Preferably the sealing body encloses, between the open and the closed valve position of the sealing body, an angle which is larger than 90°. Here an axis passing through the sealing body, which is designed perpendicular to the axis of rotation of the sealing body and stationary in relation to the sealing body, encloses an angle which is larger than 90° between the situation in the open valve position and the situation in the closed valve position.

Preferably, the thickness of the sealing surface element is constant. A constant thickness of the sealing surface element simplifies the injection moulding process and reduces susceptibility to errors. In an alternative version, the thickness of the sealing surface is essentially constant, but the sealing body additionally has gripping ribs. These gripping ribs are raised points on the sealing surface element which preferably are small in size themselves and by means of which a gripper arm can grip the sealing body and vary its position. Particularly preferably, the gripping ribs are designed as internal gripping ribs inside the ball segment-shaped sealing surface element.

In an advantageous version, the central area of the sealing surface element is flattened. This central area is also particularly suitable for arranging gripping ribs on this central area of the sealing surface element. These make it possible for automated systems to grip the sealing body more easily.

The seal, in one possible embodiment, is designed as a sealing lip.

Preferably the bearing elements have openings for a connection to a drive wheel. In one possible embodiment, the sealing surface element has a ring-shaped sealing surface, which is designed capable of being placed onto a ring-shaped seal.

The sealing system preferably has a spring element which is arranged with limited movement within the sealing system and by means of which the seal and the sealing surface element of the sealing body are pressed onto one another. The spring element is therefore arranged in the sealing system in such a way that the extension of the spring element is on the one hand limited by a housing component of the sealing system, for example the spring-guiding element, and on the other hand by the seal or the sealing surface element. As a result, a spring force acts on the seal or the sealing surface element, by which means the seal and the sealing surface element are pressed against each other when the sealing body is positioned in a closed valve position. Hence the sealing system, in one possible version, has a spring element which is arranged on the seal and whose movement is limited by the spring-guiding element. Here, with a positioning of the sealing body in a closed valve position, such a pressure is exerted by the spring element on the seal that the seal is pressed onto the sealing surface element.

Alternatively the spring element is arranged within a bearing adapter mounted so as to be rotatable in the valve body. This bearing adapter is flexibly connected to the sealing body. The axis of rotation of the sealing body passes, in one possible embodiment, not through the sealing body but through the bearing adapter.

In a preferred version the spring element is integrated into the seal. Here, preferably the shape of the seal and the arrangement of the seal produce the desired spring effect within the sealing system and also the pressing force between the sealing surface element and the seal. The sealing lip must, for this purpose, be appropriately prestressed in the installation space, preferably on the valve body, in order to obtain sufficient pressing force for sealing between the sealing body and the seal.

Alternatively the spring element can also be integrated into the sealing body.

Advantageously it is possible, by means of the invention, to simplify the assembly of the sealing system, whereby in a preferred version first the sealing body, then the seal and subsequently the spring element are mounted.

As per the design, the sealing body is executed in the form of a partial spherical surface. In the event of an open valve, the sealing body does not touch the seal, as a result of which there can be no one-sided material stress on the contact surfaces. The key part of the sealing body is consequently the surface which covers the seal opening in the seal and therefore closes the valve. Essentially, therefore, the sealing body consists of this "valve closed" surface, i.e. a surface for sealing off or covering the seal opening, and elements for the storage of the sealing body in the valve body. In addition, the sealing system has a seal and preferably also spring elements with limited movement, with the spring elements providing contact pressure between the sealing body and the seal.

The sealing body is essentially reduced to a sealing surface element whose surface or sealing surface blocks the seal opening and hence the flow path through the valve. As a result, the weight is advantageously minimised and the installation size reduced.

With such a construction it is possible for the sealing body to completely leave the seal. By this means, the uneven stress placed on the seal with positioning of the sealing body in the open valve position is prevented.

The sealing body preferably has a fixed position of the axis of the bearing, which means the sealing body is ideally positioned in the sealing surface and the tolerance chains are minimised.

Furthermore it is advantageous to incorporate the seal on the valve input side, because by this means the number of required seals is reduced.

In addition a spring element, for example one or more compression springs, presses the seal against the sealing body via a spring holder. Thus no special spring characteristics are required from the seal. The seal seals off the housing components against each other, directly on the sealing body and on the reverse side. Preferably this takes place axially, radially or, as a combined sealing system, as a combination of axially and radially. Thus additional seals and parts can be dispensed with.

Preferably the spring force is limited in its movement in order to ensure secure insertion of the sealing body into the seal. Furthermore, in this way the stress placed on and the deformation of the seal is limited for the open valve position. This additionally provides a major advantage for the assembly of the springs. Furthermore, this limited movement can be set in such a way that the maximum deformation is limited due to the spring force of the seal designed as a sealing lip. By this means, the insertion of the sealing body into the seal can be optimised.

In order to be able to further reduce the installation size of the sealing body, the radius of the sealing surface is minimised. In this way, the required torque is also reduced. As a result, the drive unit's energy input can be reduced. The sealing body has a sealing surface element consisting of a sealing surface and a tangential transition into an inflow surface and thus ensures the secure insertion into the final seal seat. In addition, the sealing body is preferably constructed symmetrically. It has two identical bearing positions and therefore the component does not have to be in the correct position when supplied. Such a design is also suitable for automation.

The section of the sealing body ought to be symmetrical in the centre of the ball segment, i.e. in the centre of the ball segment-shaped sealing surface element, in order to achieve an ideal roundness and as few 'gutters' on the sealing surface as possible during injection moulding. Furthermore, the spherical sealing surface element is offset in order to provide a suitable platform for the part for assembly purposes. In this way, the sealing body can be easily supplied and measured.

In one possible variant, direct connection of the sealing body to the drive train takes place. The drive wheel of the gearing mechanism is sealed off by means of the lip seal and engages directly with the sealing body, preferably by means of a square or a star.

The above embodiments are merely to illustrate the technical solutions of the present invention and are not intended to limit the present invention. Although the present invention has been described with reference to the above preferred embodiments, it should be appreciated by those skilled in the art that various modifications and variations may be made without departing from the spirit and scope of the present invention.

## Claims

1. A sealing system (1) for a valve for the interruption of a fluid flow along a fluid flow path passing through the valve, the sealing system (1) comprising:
an inlet adapter (10);
a valve body (7) connected to the inlet adapter (10);
a seal (5) arranged between the inlet adapter (10) and the valve body (7) with a seal opening (6) through the seal for the fluid flowing when the valve is open; and
a sealing body (2) mounted within the valve body (7) to be rotatable around an axis running substantially perpendicular to the fluid flow path, the sealing body (2) comprising a ball segment-shaped sealing surface element (3) and bearing elements (4) arranged at the side(s) of the sealing surface element (3);
wherein the sealing body (2) is positionable by a rotary movement in an open and a closed valve position, and wherein the sealing surface element (3) is designed that the sealing surface element (3) completely closes the seal opening (6) in the closed valve position and after rotation of the sealing body (2) into the open valve position where there is no point of contact with the seal (5).

2. The sealing system (1) of claim 1, wherein the seal opening (6) is designed circular or oval.

3. The sealing system (1) of any one of claims 1-2, wherein the sealing body (2) is mounted to be rotatable around an axis leading through the laterally arranged bearing elements (4) within the valve body (7).

4. The sealing system (1) of any one of claims 1-3, wherein the sealing system comprises a spring element (8), the spring element (8) is arranged with limited movement within the sealing system (1) and the seal (5) and the sealing surface element (3) of the sealing body (2) are pressed onto each other by the spring element (8).

5. The sealing system (1) of any one of claims 1-4, wherein the sealing system comprises a spring element (8), the spring element (8) is arranged on the seal (5) and the movement of the spring element (8) is limited by a spring-guiding element (9) within the inlet adapter (10), wherein a pressure is exerted by the spring element (8) on the seal (5) that the seal (5) is pressed against the sealing surface element (3) with a positioning of the sealing body (2) in a closed valve position.

6. The sealing system (1) of claim 5, wherein the spring element (8) is integrated in the seal (5).

7. The sealing system (1) of claim 6, wherein the shape of the seal (5) and the arrangement of the seal (5) within the sealing system (1) produces a spring effect.

8. The sealing system (1) of claim 4, wherein the spring element (8) is arranged within a bearing adapter (4a) mounted so as to be rotatable within a valve body (7), the sealing body (2) is flexibly connected to the bearing adapter (4a).

9. The sealing system (1) of any one of claims 1-8, wherein the seal is designed as a sealing lip.

10. The sealing system (1) of any one of claims 1-9, wherein the sealing body (2) encloses an angle which is larger than 90° between the open and closed valve position.
